# EUROPEAN PATENT SPECIFICATION

(11) **EP 4 440 298 B1**
(45) Date of publication and mention of the grant of the patent: **15.04.2026**
(21) Application number: 22843355.3
(22) Date of filing: 23.11.2022
(51) Int. Cl.: A01G 23/00, B66C 1/58

(54) **AUXILIARY BEAM FOR AN ENERGY WOOD GRAPPLE AND A SYSTEM AND METHOD FOR HARVESTING ENERGY WOOD**
HILFSBALKEN FÜR EINEN ENERGIEHOLZGREIFER SOWIE SYSTEM UND VERFAHREN ZUM ERNTEN VON ENERGIEHOLZ
POUTRE AUXILIAIRE POUR GRAPPIN À BOIS DE FEU ET SYSTÈME ET PROCÉDÉ DE COLLECTE DE BOIS DE FEU

(30) Priority: 03.12.2021 FI 20216245
(43) Date of publication of application: 09.10.2024
(73) Proprietor: TMK Machinery OY, 41520 Hankasalmi (FI)
(72) Inventor: KOPONEN, Tenho, 41560 SÄKINMÄKI (FI); KOPONEN, Mika, 05720 HYVINKÄÄ (FI)
(74) Representative: Kespat Oy
(86) International application number: PCT/FI2022/050781
(87) International publication number: WO 2023/099811

(56) References cited:
- US-A- 5 320 149
- ANONYMOUS: "Kasva työsi mukana - TMK Energiakoura", 19 September 2020 (2020-09-19), pages 1 - 9, XP093029497, Retrieved from the Internet <URL:https://web.archive.org/web/20200919225354/https://energiakoura.fi/kasva-tyosi-mukana/> [retrieved on 20230307]

## Description

The invention is related to an auxiliary beam for an energy wood grapple. The invention is also related to a method and system for harvesting energy wood.

An auxiliary beam is known for increasing the efficiency related to working with an energy wood grapple. Exemplary auxiliary beams are known from the TMK300 with solid extension from TMK Machinery, Hankasalmi, Finland, or from US 5 320 149 A.

An auxiliary beam can be connected as an extension to the end of a boom assembly of an excavator, which functions as the work machine. Instead of the end of the boom assembly, the energy wood grapple is then arranged at the end of the auxiliary beam. For example, an auxiliary beam improves the reach of the energy wood grapple. Therefore, it is also often called an extension beam. With an auxiliary beam, the energy wood grapple can be easily taken over ditches, for example, or other objects that hinder the movement of the excavator without a need to drive the excavator to places that are difficult to access. For example, crop growing in the bank beyond the ditch or even behind it can be harvested from the edge of a plain field area or roadside. An auxiliary beam also functions as an extension in other situations, thus avoiding the need to move the excavator so often.

In addition, an auxiliary beam may include a leaning support facilitating the moving of the excavator. Being a structure that protrudes from the actual boom assembly end, an auxiliary beam as such prevents or at least essentially hinders taking support from the ground, i.e., leaning thereto, in a manner known per se and particularly characteristic to crawler excavator work. This is often needed, for example, when turning a crawler excavator or crossing ditches. Moreover, it is not recommended to load an energy wood grapple located at the end of an auxiliary beam heavily against the ground for this purpose. For this, the auxiliary beam is equipped with a support leg that functions as a leaning support. Loading can take place against it without exerting extraordinary stress to other structures. Typically, the support leg is located at the end of the auxiliary beam that is on the side of the boom assembly and on the opposite side of the auxiliary beam relative to the boom assembly end. Thus, in a normal operating situation of an energy wood grapple, it is directed downwards, i.e., towards the ground.

Although a known auxiliary beam increases the efficiency of energy wood harvesting, when operating at its most efficient, energy wood harvesting, however, requires that felled trees can be arranged already in the upstream harvesting chain so that their loading and the subsequent transportation would take place as efficiently as possible. The energy wood grapple itself, if it is implemented with a mass handling feature, can be used to handle multiple trees at a time and form small grapple bunches from them with dimensions determined by the grapple.

However, particularly at thinning sites, multiple grapple bunches may accumulate in a very small area. In this case, particularly their loading takes time and requires the loader to move the boom assembly back and forth for moving bunches to the load body. In addition to efficient work, this also affects the fuel economy of energy wood harvesting. A similar problem exists and is even repeated when working at thinning sites, particularly if the energy wood grapple used is without a mass handling feature. In addition to loading, operating with the energy wood grapple as such can be experienced inefficient and time-consuming in certain situations. Clearing of a logging road at a thinning site can be mentioned as an example of this. In order that the machine can advance along the logging road formed for it with the energy wood grapple, bunches formed with the energy wood grapple must be moved beside the logging road with the grapple. As a result of this, too, the boom assembly needs to be moved horizontally back and forth for moving the bunches formed in the energy wood grapple out of the way.

The object of the invention is to provide an auxiliary beam, which increases the efficiency of work performed with an excavator while using an energy wood grapple and, more specifically, material handling related to energy wood harvesting. The characteristic features of the auxiliary beam according to the invention are set forth in Claim 1. Another object of the invention is to provide a method and system for energy wood harvesting, which increases the efficiency of work performed with an excavator while using an energy wood grapple. The characteristic features of the method and system according to the invention are set forth in Claims 14 and 15.

The elongated auxiliary beam according to the invention has an openably closable grapple arranged therein for performing material handling. The grapple is separated from the energy wood grapple itself and it can be operated independently. For forming the grapple, a support leg arranged in the auxiliary beam is surprisingly utilised, the support leg being otherwise used to receive the weight of the boom assembly and the excavator during the ground contact realised with the help of the auxiliary beam. The support leg then functions as a fixed jaw of the material handling grapple formed in the auxiliary beam. In addition to the support leg, a moving jaw, rotatable back and forth by at least one actuator, is pivotally arranged in the auxiliary beam. Together with the fixed jaw fitted in the support leg, it is arranged to form a material handling grapple in the auxiliary beam. The grapple of the auxiliary beam can be used to handle tree stand harvested, for example, with the energy wood grapple which is located parallel to the elongated auxiliary beam.

According to an embodiment, the support leg can be formed as a box construction and is thus sheet metal fabrication. Thus, according to an embodiment, the support leg is arranged to formed of two parallel wall constructions. The wall constructions are arranged protrudingly from the frame of the auxiliary beam and at a distance from each other. The movably arranged jaw can be rotated between the wall constructions and therefore, more generally, inside the support leg. In this way, the moving jaw can be arranged inside the support leg by rotating it for moving it out of the way of other work. The swinging motion of the moving jaw takes place in the direction of the plane defined by the wall constructions, that is, also by the support leg formed by these, arranged protruding from the frame. The moving jaw is then dimensioned to make it fit inside the box construction, that is, between the wall constructions, through an opening beside the box construction, more generally, the support leg. Thus, the movably arranged jaw and the fixed jaw go within each other and the moving jaw can be protected and hidden between the wall constructions and, more generally, inside the support leg.

A ground stop included in the support leg is arranged at the end of at least one of the parallel wall constructions. According to an embodiment, the ground stop can also be a part of the support leg's box construction. In this case, it connects the wall constructions of the support leg at their end and is arranged to form a contact member or a heel against the ground, in the support leg. When implemented in this way, the box construction, i.e., the fixed jaw of the grapple, strengthens the structure of the support leg, too. Due to the box construction, the actuator for rotating the moving jaw can also be protected within the support leg, i.e., the fixed jaw. Thus, the actuator can be located between the wall constructions and thereby also within the box construction that forms the support leg.

Due to the box construction and the ground stop arranged therein, perpendicular to the wall constructions and preferably sheet-like, the surface pressure exerted to the ground is also reduced. This improves the bearing capacity of the support leg particularly on soft surfaces. In other words, due to this, the support leg cannot sink to the ground so easily, although it is loaded with the excavator's weight against the ground via the boom assembly end.

According to an embodiment, all of the fixed pivot points of the grapple, that is, one end of the actuator and, in addition to it, the pivot joint of the moving jaw, can be arranged in the box construction that forms the support leg and, more specifically, in its wall constructions. Thus, no stress is necessarily exerted in this respect to the frame of the auxiliary beam itself by the grapple.

According to still another embodiment, a movably arranged jaw can be composed of at least two parts. These can be pivotally connected to each other. Thus, a large movement range can be achieved for the moving jaw and, in addition, it can be better protected inside the support leg. Furthermore, an improved grip of the grapple can be achieved, that is, elongated trees are held better in the grapple. According to an embodiment, this can be implemented with a suitable pivoting geometry and, additionally, a reaction arm with fixed dimensions, which is arranged between the outer part, i.e., the tip of the moving jaw and the auxiliary beam frame. Thus, when closing the grapple, the tip of the moving jaw is force-controlled due to the pivoting and the reaction arm in such a way that it can be folded, for a large length, within the support leg for protection. In addition, this also provides an improved swinging motion for the tip relative to the rest of the jaw. This improves the capture ability of the grapple and the seizure and holdability of trees in the grapple.

Due to the method according to the invention, a grapple arranged in an auxiliary beam enables material handling already during the harvesting operation performed with the energy wood grapple. Hence, it accelerates and later also facilitates, for example, loading and material transportation. Specifically, this reduces the need of a back and forth rotational motion of the work machine on the undercarriage, i.e., its crawler chassis, which is away from work performed with the energy wood grapple and also from later loading operation for material handling. More specifically, grapple bunches formed with the energy wood grapple need not then be taken individually to their loading location, such as beside the logging road, with the boom assembly immediately after forming them. Instead, the energy wood grapple can be used to first collect together grapple bunches closer to the clearing site, such as in front of the excavator, or alternatively, to form individual smaller bunches near their harvesting point.

Before, for example, advancing on the logging road, the material handling grapple of an auxiliary beam according to the invention may be used to collect or at least transfer a larger collected energy wood bunch at one go to its loading location, i.e., a place where it is easy to load to the transport vehicle. Before this transfer, the grapple of the auxiliary beam can also be used to collect together even smaller bunches and then move it as a larger bunch beside the logging road, for example. From there, it is easier and quicker to load for transportation at a later stage. Then, while operating only just with the grapple of the auxiliary beam, it may become necessary to more essentially rotate the excavator's upper carriage relative to its crawler chassis, i.e., undercarriage. When operating in this way, operation becomes more efficient particularly when forming a logging road for an excavator. Once small bunches have been collected together with the grapple or at least moved out of the way with the grapple, it is possible to drive the excavator along the logging road to the following place where energy wood harvesting is again continued, for example, on both sides and in the direction of the logging road. Other additional advantages achieved with the invention become apparent from the description and the characteristics are set forth in the claims.

The invention, which is not restricted to the embodiment presented below, is described in more detail by making reference to the appended drawings, in which:
- Figure 1: shows an oblique view of an example of the auxiliary beam as seen from the direction of the fastening side of the energy wood grapple,
- Figure 2: shows the auxiliary beam of Figure 1 as seen from the end on the side of the support leg,
- Figure 3: shows the auxiliary beam of Figures 1 and 2 arranged in the boom assembly of a work machine, as well as an exemplary embodiment of the method according to the invention,
- Figure 4: shows an enlarged view of Figure 3 depicting the vicinity of the boom assembly end, with the auxiliary beam arranged in a work machine,
- Figure 5: shows a lateral view of the auxiliary beam of Figures 1 and 2 on the side of a movably arranged jaw,
- Figure 6: shows a partial cross-sectional and oblique view of another embodiment of the auxiliary beam according to the invention as seen from the direction of the support leg, and
- Figure 7: shows a partial cross-sectional view of the auxiliary beam of Figure 6 as seen from the direction of the support leg with the moving jaw in some of its positions.

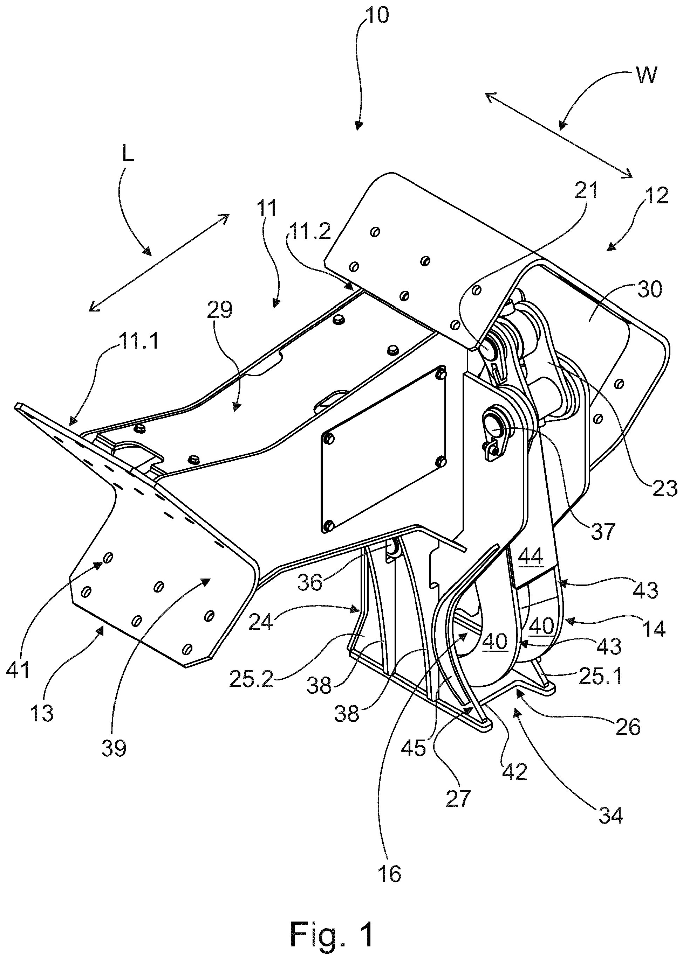

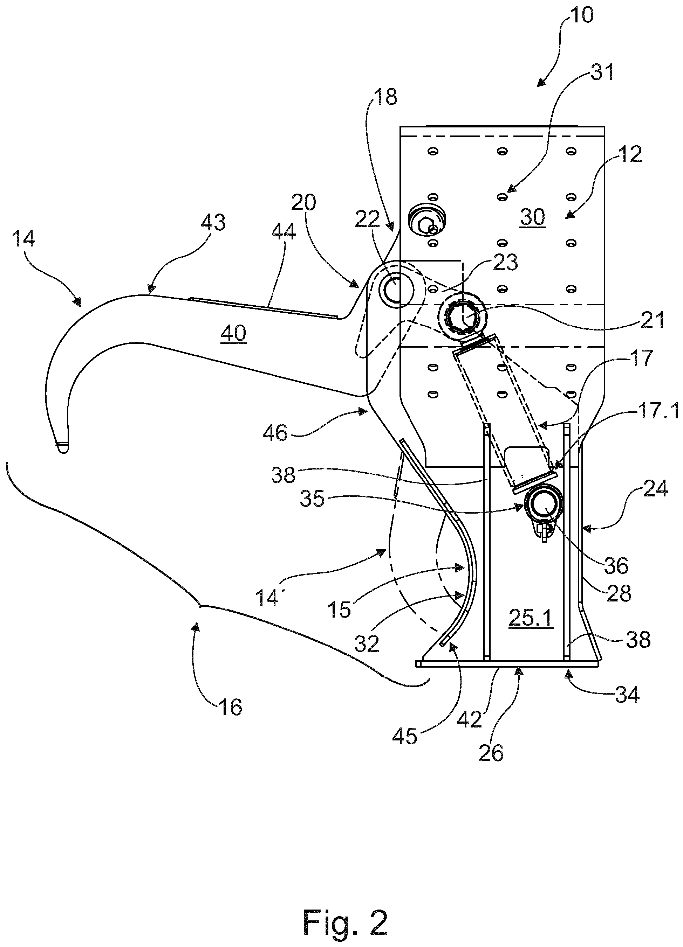

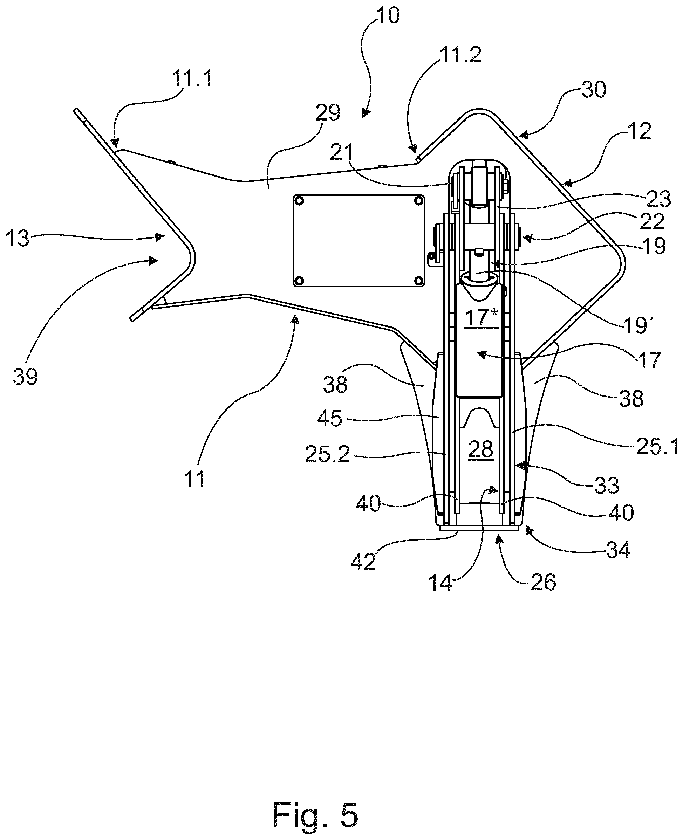

Figures 1, 2 and 5 show a first example of the auxiliary beam 10 according to the invention for an energy wood grapple 200. Figure 1 is an oblique view of the auxiliary beam 10 as seen from the direction of the fastening side of the energy wood grapple 200, Figure 2 as seen from the end on the side of the support leg 34 and Figure 5 as seen from the side. As its basic components, the elongated auxiliary beam 10 includes a frame 11, a support leg 34, a pair of jaws 13 arranged to form a grapple 16 and a hydraulic actuator 17 for the grapple 16, that is, for opening and closing the grapple 16.

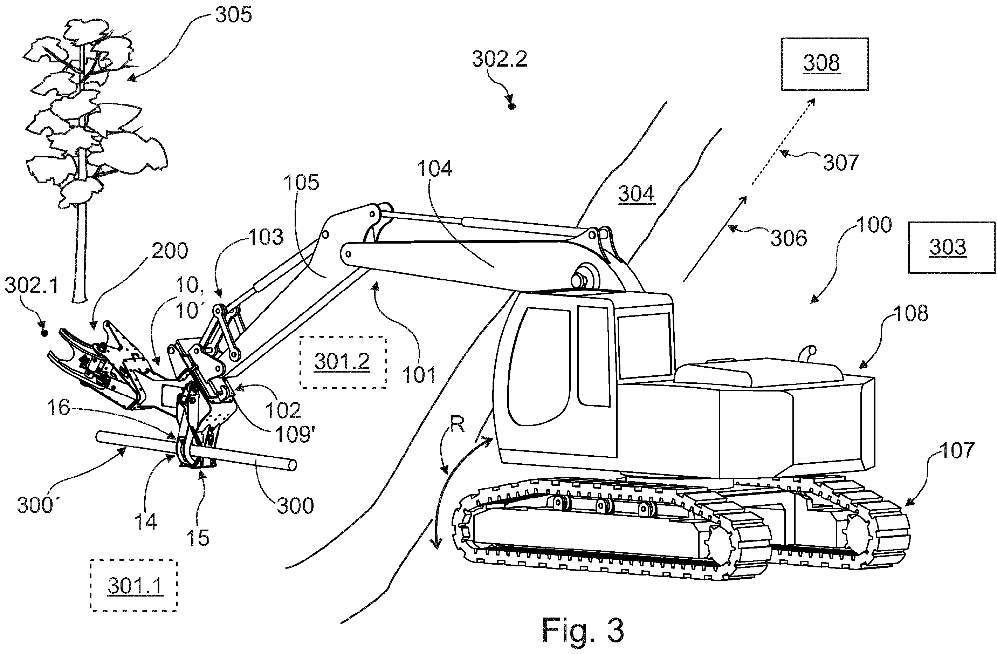

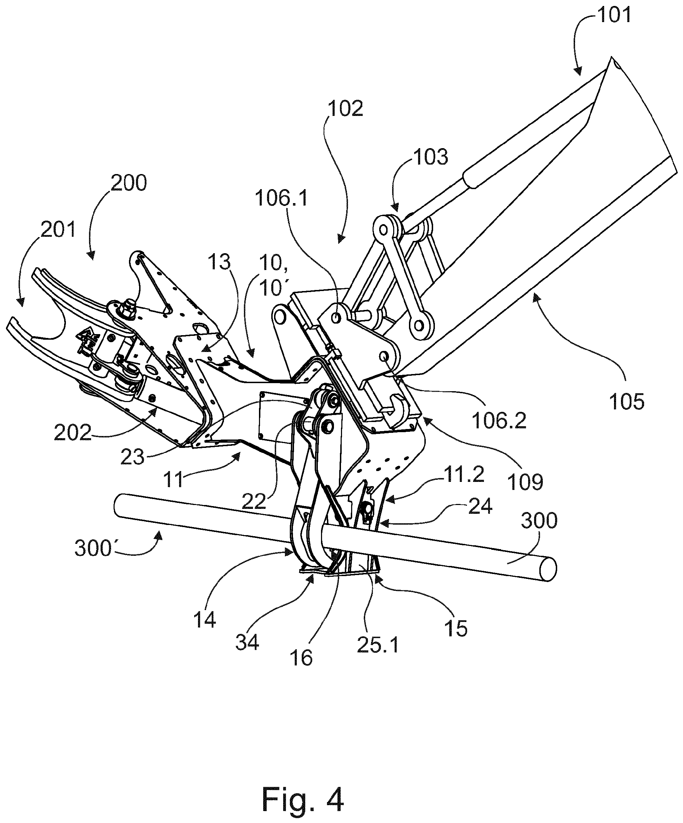

The frame 11 of the auxiliary beam 10 is equipped with a first fastening arrangement 12 for arranging the auxiliary beam 10 at the end 102 of the boom assembly 101 of a work machine, such as, for example, an excavator 100 (Figures 3 and 4). The end 102 of the boom assembly 101 of an excavator 100 can be equipped, in a manner known per se, with a bucket swing arm assembly 103 for changing the position of the auxiliary beam 10 in the vertical plane. In addition, the end 102 of the boom assembly 101 of an excavator 100 can be equipped, in a manner known per se, with a fastening interface 109 for an attachment, such as, for example, a bucket, or now, for an auxiliary beam 10.

The boom assembly 101 of an excavator 100 includes, as is well known, a main boom 104 pivoted to the excavator and an arm, which is also often called an excavator arm 105, pivoted to its end. At the end of the excavator arm 105, there is a fastening interface 109 for an attachment 10' or at least part of it. An optional selected quick connector can be provided at the end 102 of the boom assembly 100. The attachment 10', such as, for example, a bucket, or now, in the case of the invention, an auxiliary beam 10 according to the invention is detachably quick-connectable to this quick connector with a selected compatible counter piece. The counter piece is also often called an adapter. Here, quick connection means fastening, for example, without tools and without leaving the driver cabin.

A quick connector functioning as the fastening interface 109 can be arranged directly at the end 102 of the boom assembly 101, in the pivot points 106.1, 106.2 of the bucket rotation. On the other hand, it can also be placed, for example, in a rotator or in a combination of a bucket rotator and tilter, a tiltrotator, as a part of them. Yet, on the other hand, the fastening arrangement 12 can of course also be arranged to be directly fastened to a rotator, thus, without any specific adapters. Like other attachments that are connectable to the end 102 of a boom assembly 101 of an excavator 100 with, for example, quick connectors, an auxiliary beam 10 can also be arranged, including all of the functions fitted to it, exclusively in the fastening interface 109 arranged at the end 102 of a boom assembly 101. In other words, it can therefore be arranged without other mechanical fastenings in the boom assembly 101 of an excavator 100. Thus, its connecting and also disconnecting can be performed very fast.

The auxiliary beam 10 has an elongated frame 11. Hence, it can be said that it has a length direction L, which is larger than the width direction W, for example. The frame 11 of the auxiliary beam 10 is elongated in the direction of the line between the first and second fastening arrangements 12, 13. The purpose of the auxiliary beam 10 is to provide reach for work performed with an energy wood grapple 200 when the auxiliary beam 10 is fastened to the end 102 of the boom assembly 101 of an excavator 100. Therefore, the auxiliary beam 10 is also often called an extension beam.

According to an embodiment, the frame 11 of the auxiliary beam can be arranged to be formed of an elongated box construction 29. The box construction 29 can be, for example, sheet metal fabrication. It can include box beams for stiffening the construction. As the fastening arrangement 12 at the end 30 of the box construction 29, now formed mainly rectangular and directed obliquely upwards, that is, at one end 11.2 of the frame 11, a hole arrangement 31 is now used. The configuration of the hole arrangement 31 is arranged such that it suits to two or more quick-connecting adapters, that is, their counter pieces fastened to the auxiliary beam 10. On the other hand, the hole arrangement 31 can also suit directly to rotators. For the counter piece of each adapter model, the hole arrangement 31 can have dedicated openings, to which the counter piece is connectable with bolts, for example. Therefore, due to the hole arrangement 31, the auxiliary beam 10 can be arranged in several different adapter models, which are available for excavators 100 in multiple different types, or alternatively, also directly in rotators equipped with optional tilting, for example (or vice versa).

Furthermore, another fastening arrangement 13 is arranged in the auxiliary beam frame 11 at one of its ends 11.1, this being the opposite end relative to the fastening of the auxiliary beam 10 to the boom assembly 101 of the excavator 100. Its purpose is to arrange the energy wood grapple 200 in the auxiliary beam 10 at a distance from the end 102 of the boom assembly 101 of the excavator 100. In the embodiment set forth, this end 11.1 of the auxiliary beam 10 is gap-like; that is, its side profile is a V opening outwardly from the end 11.1 of the auxiliary beam 10. An energy wood grapple 200 can be fastened to the gap 39 arranged at the end of the box construction 29 by its fastening point. The gap 39 can also have a hole arrangement 41. The energy wood grapple 200 is fastened to the hole arrangement 41 with bolts, for example.

The energy wood grapple 200 shown in more detail, for example, in Figure 4 is meant for harvesting small-dimensioned wood in a manner known per se. It can have a cutting device, which is implemented with, for example, guillotine cutting or a blade saw. Guillotine cutting can have either a mobile, or alternatively, a stationary blade. In a stationary blade, the tree to be cut is pressed against the blade with pliers 201 so that it is cut. The pliers 201 are then operated by a hydraulic actuator 202. The blade may as well be fitted to the pliers. Here, small-dimensioned wood also means tree stand with its diameter even between 10 cm and 20 cm, which can be harvested with an energy wood grapple 200 depending on its features. Most typically, tree harvested with an energy wood grapple 200 is meant for combustion for producing energy.

The energy wood grapple 200 can be either equipped with a mass handling feature or, alternatively, be without it. With the mass handling feature, it is possible to handle multiple trees at a time in a manner known per se. Thus, it enables several cuts at different times without releasing in trees from time to time that have been cut and collected to the energy wood grapple 200 already earlier. For mass handling, it may be equipped with accumulating grippers, for example, which hold the trees already cut and collected to the energy wood grapple 200, in connection with the energy wood grapple 200, during the following one or more cuts. With the mass handling feature, it is possible to form small grapple bunches from cut and collected trees, determined by the harvesting capacity, in other words, dimensions of the energy wood grapple 200.

An energy wood grapple 200 implemented without the mass handling feature performs a refusal of the cut wood material after each cutting, for example. The wood material may then include, for example, at least one trunk, pole, stem of crop or top refuse, but particularly when working at thinning sites, the energy wood grapple 200 can hold more of them at a time, even though not equipped with a mass handling feature.

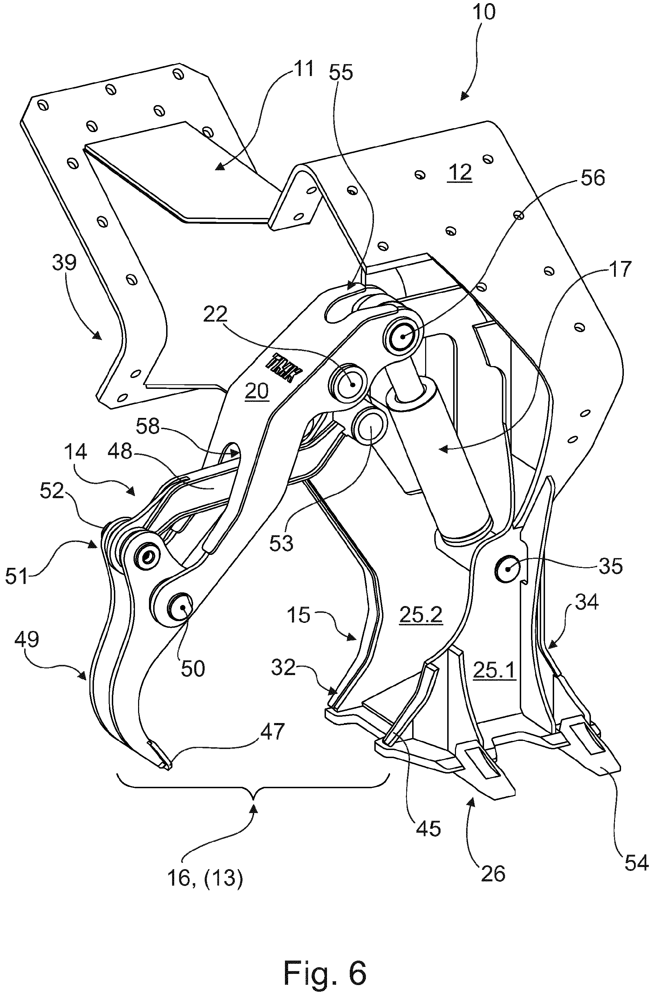

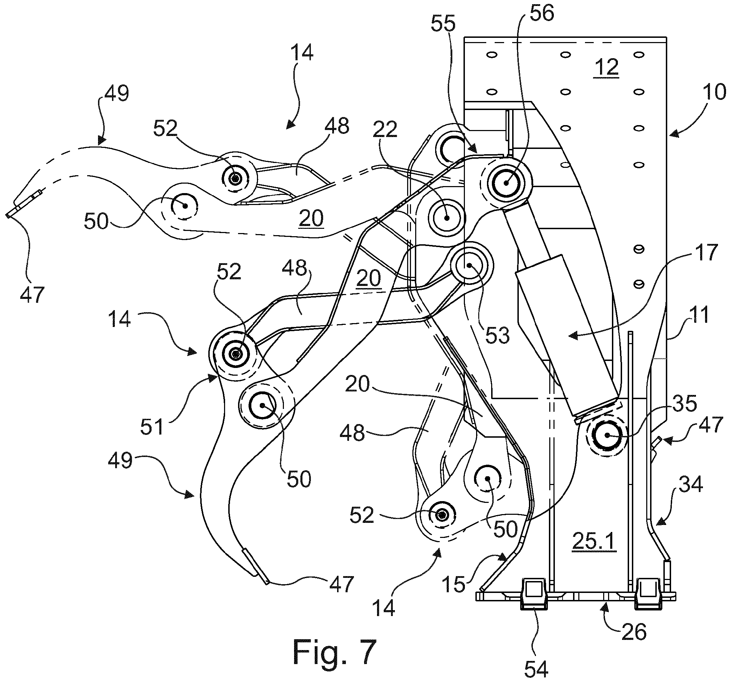

A support leg 34 is arranged in the frame 11 of the auxiliary beam 10, in connection with one of its ends 11.2. The support leg 34 is arranged to receive the weight of the boom assembly 101 and the excavator 100 during the ground contact of the auxiliary beam 10. The support leg 34 is arranged to be directed to the opposite side of the frame 11 relative to the first fastening arrangement 12. In addition to putting weight on the ground, the support leg 34 can also be utilised in other ways. For example, it can be used for moving an excavator 100 by pulling, for example. For this, the support leg 34 can be equipped with claws 54, such as, for example, shown in the embodiment of Figures 6 and 7.

The auxiliary beam 10 includes a first jaw 14 that is functionally pivoted in connection with the support leg 34 and rotatably movable with an actuator 17 arranged in the auxiliary beam 10. The first jaw 14 is arranged to form, together with the support leg 34, an openably closable grapple 16 for material handling that can be performed with the auxiliary beam 10. Therefore, the other jaw 15 of the pair of jaws 13 that forms the grapple 16 in the auxiliary beam 10, thus now the support leg 34, is fixed, i.e., stationary relative to the frame 11. Thus, the grapple 16 formed by the jaws 14, 15 is openably closable in the transverse direction relative to the elongated frame 11 of the auxiliary beam 10. Thus, it makes it possible, for example, to grab objects lying on the ground parallel to the elongated direction of the auxiliary beam 10, such as, for example, pick up elongated tree trunks to be held by the grapple 16 within it. This is well illustrated in Figures 3 and 4, for example. Instead of the grapple, a grab may be used as well.

The first one of the jaws 14 arranged to form the grapple 16 is pivotally connected to the auxiliary beam 10 and now, more specifically, to its support leg 34, for opening and closing the grapple 16. Hence, the jaw 14 is movably arranged in the grapple 16 and the frame 11. The movement is provided now with one hydraulic actuator 17. It is used to rotate the jaw 14 relative to the pivot joint 22 arranged for it in the support leg 34. The pivot joint 22 is at the end of the jaw 14.

In the embodiment set forth, the support leg 34, and thus also the fixed jaw 15 of the grapple 16, are arranged to form two wall constructions 25.1, 25.2. Hence, the wall constructions 25.1, 25.2 form two parallel claws 33 located at a distance from each other for the fixed jaw 15. The wall constructions 25.1, 25.2 are placed in parallel in the direction of the planes defined by them. In addition, the wall constructions 25.1, 25.2 are arranged protrudingly from the frame 11 of the auxiliary beam 10 in the downward direction, in the main operating position of the auxiliary beam 10.

At least one of the parallel wall constructions 25.1, 25.2 has a ground stop 26 arranged at its end 27. This, too, can be a sheet-like component 42. Due to it, the surface pressure caused by the support leg 34 is small and therefore the support leg 34 does not sink so easily in a soft terrain, for example, when the weight of the excavator 100 is put on it.

Two parallel wall constructions 25.1, 25.2 are arranged as a part of a box construction 24, which the support leg 34 is now arranged to form. The box construction 24 is open on the side of the movably arranged jaw 14 to enable the jaw 14 to be rotated and thus taken inside the box construction 24, as is shown in Figure 2, for example. There, the jaw rotated within the support leg 34 is illustrated with broken lines and identified with reference number 14'. Hence, the movably arranged jaw 14 can be rotated towards the edges of the wall constructions 25.1, 25.2 and also between these. In other words, the movably arranged jaw 14 can be rotated back and forth in the direction of the plane defined by the wall constructions 25.1, 25.2.

The box construction 24 can also include, relative to the side left open for the moving jaw 14, a rear wall 28 arranged on the opposite side of the box construction 24. It is arranged to connect the parallel wall constructions 25.1, 25.2 to each other in their length direction, that is, in the direction protruding downwards from the frame 11. The rear wall 28 has an effect on stiffening the support leg 34.

In the embodiment set forth, the ground stop 26 is also arranged to connect the parallel wall constructions 25.1, 25.2 to each other by their end 27. This also has an effect on stiffening the support leg 34 formed from the wall constructions 25.1, 25.2 and protruding from the frame 11.

In addition to that the movably arranged jaw 14 is curved, the wall constructions 25.1, 25.2, and more generally, the support leg 34, are arranged curved at their edge 32 on the side of the movably arranged jaw 14. This improves the retention of material 300' in the grapple 16 when the jaws 14, 15 are against each other and the material 300' is pressed between them. The edge 32 can have extensions 45 to increase the axial contact area in the fixed jaw 15.

When the support leg 34 is arranged on the opposite side of the frame 11 relative to the first fastening arrangement 12, the support leg 34 is also level with the line formed by the length direction L of the frame 11. The first fastening arrangement 12 is provided in a corresponding way: in the embodiment set forth, it is above the support leg 34 during the operating condition of the auxiliary beam 10. Then, the grapple 16 arranged to be formed between the moving jaw 14 and the curved edge 32 of the support leg 34 is slightly offset relative to the line formed by the length direction L of the frame 11, in the operating situation of the grapple 16. This is the case particularly when the grapple 16 holds trees 300. The offset of the grapple 16 relative to the frame 11 is provided by arranging the pivoting of the movably arranged jaw 14 in the frame 11 for enabling this offset; that is, beside the length direction L line of the frame 11 in the embodiment set forth now. In this case, the energy wood grapple 200, which, like the support leg 34, is mainly on the same line relative to the frame 11 as the support leg 34, does not disturb material handling performed with the grapple 16 and is not at risk to be damaged by this. Moreover, in addition to these, the driver of the work machine 100' has a better view to the material 300' handled with the grapple 16 and also to the grapple 16 itself. This is partly also due to the fact that the grapple 16 is formed slightly offset from the first fastening arrangement 12 and particularly from the frame 11 of the auxiliary beam 10.

The support leg 34 and more specifically in the embodiment set forth, its wall constructions 25.1, 25.2 are arranged to also extend within the frame 11 of the auxiliary beam 10. Then, when using the support leg 34, loading forces are transmitted more uniformly to the frame 11 of the auxiliary beam 10. Moreover, in this way, it is easy to arrange a pivot point 22 for the movably arranged jaw 14 for rotating it. Therefore, for the movably arranged jaw 14, the sheet components forming the support leg 34, i.e., wall constructions 25.1, 25.2, and the movably arranged jaw 14 have pivot point openings, via which the pivoting of the movably arranged jaw 14 is provided. The jaw 14 connects to the wall constructions 25.1, 25.2 with a pivot pin 37 that goes through the openings.

In the embodiment set forth, the wall constructions 25.1, 25.2 also extend slightly to the side of the movably arranged jaw 14 in the support leg 34. This part of the wall constructions 25.1, 25.2 is identified with reference number 46 in Figure 2. In this way, the pivot joint 22 of the jaw can be in a more optimal place, in the embodiment set forth.

The actuator 17 of the movably arranged jaw 14 is arranged in the auxiliary beam 10 completely, hence without connecting to parts external to the auxiliary beam 10, such as, for example, to the boom assembly 101 of the work machine 100'. In the embodiment set forth, the actuator 17 is arranged between the wall constructions 25.1, 25.2, that is, within the box construction 24 and thereby also the support leg 34. The hydraulic actuator 17 is equipped with a moving actuator member 19. The actuator member 19 is in this case composed of the piston rod 19' of the hydraulic actuator 17, arranged to move back and forth. The piston located at its end is arranged to move back and forth inside the cylinder in its cylindrical part 17* acted on by a pressure medium, such as, for example, a fluid. At one of its ends 17.1, the hydraulic actuator 17 is connected, in this case by its cylindrical part 17*, to the box construction 24 of the support leg 34 with a pin 36 (Figures 1 and 2) by its link. Hence, a pivot mechanism 35 is arranged in the wall constructions 25.1, 25.2 for the actuator 17 of the jaw 14 for connecting it thereto by one of its ends 17.1. The hydraulic actuator 17 can be a double-acting fluid-operated hydraulic cylinder known per se equipped with one piston and a piston rod.

The actuator member 19, that is, now the piston rod 19', is arranged to act on one of the jaws 14 of the pair of jaws 13 that form the grapple 16, that is, now on the movably arranged jaw 14 for opening and closing the grapple 16. Here, between the pivot joint 22 arranged at the end of the jaw 14 and the end of the piston rod 19', in the embodiment set forth, there is a swing arm 23 with which the jaw 14 is rotated.

The swing arm 23 according to the embodiment set forth comprises two joints 21, 22, which are arranged to rotate the movably arranged jaw 14 with a linear movement of the moving actuator member 19 of the hydraulic actuator 17. At one of its ends, the swing arm 23 is pivoted to the hydraulic actuator 17 and now, more specifically, to its moving actuator member 19, to the link arranged at its end. At its opposite other end, the swing arm 23 is pivoted to the pivot joint 22 of the movably arranged jaw 14. In addition, the movably arranged jaw 14 is at an angle relative to the claw 40 of the jaw 14 at its end on the side of the joint 22, i.e., at its base part 20. The swing arm 23 forms a rotation elbow set at an angle for the movably arranged jaw 14, arranged at its end. Therefore, it can be stated that an offset 18 is arranged in the base part 20 of the movably arranged jaw 14. The actuator 17 is arranged to act on the movably arranged jaw 14 via the swing arm 23. Thus, the swing arm 23 is arranged as part of the offset 18 and a pivot mechanism 21 is arranged in it for the actuator 17.

When either a thrust or a pull movement is exerted on the pivot point 22 of the movably arranged jaw 14 with the moving actuator member 19 of the hydraulic actuator 17 via the swing arm 23, the jaw 14 is forced to move relative to its pivot joint 22 and thereby the grapple 16 either opens or closes. Due to the swing arm 23 arranged at an angle and the base part 20 of the movably arranged jaw 14, and more generally, the offset 18, the hydraulic actuator 17 is, in all of the positions of the movably arranged jaw 14, completely protected within the box construction 24, i.e., the support leg 34. Then, it is not in risk of damage in any situation.

The support leg 34, more specifically, its wall constructions 25.1, 25.2, may include one or more cross members 38. These are attached to the frame 11 of the auxiliary beam 10.

The movably arranged jaw 14 has two or more claws 40. These provide working width for grabbing objects with the grapple 16. In the embodiment set forth, there are two claws 40 arranged in parallel. They are connected to each other at the end for increasing the stiffness of the jaw 14. In addition, the claws 40 are now connected to each other also by the outer edges 43 with a sheet component 44. This, too, has an effect on stiffening the movably arranged jaw 14.

Figures 6 and 7 illustrate another embodiment of the auxiliary beam 10 according to the invention. Figures 6 and 7 show a partial cross-sectional view of the auxiliary beam 10 on the side of its support leg 34 and the first fastening arrangement 12 as well. Thus, the positioning of the actuator 17 within the support leg 34 is visible. In addition, its fastening to the movably arranged jaw 14 is also visible. Figure 7, in turn, depicts the auxiliary beam 10 of Figure 6 with the moving jaw 14 in some of its different positions. Figure 7 shows also the extreme positions for the moving jaw 14 according to the embodiment set forth.

In the embodiment set forth, the movably arranged jaw 14 is arranged to be formed of at least two parts 20, 49 in its length direction. Now these parts are the first part, the base part 20, and the second part arranged therein, the tip part 49. The base part 20 is arranged rotatably in connection with the support leg 34 and thereby also the frame 11 by its joint 22. Compared to the previous embodiment, the base part 20 is now a straighter elongated structural component. It now forms a longer part of the jaw 14 that forms the grapple 16. At the end of the base part 20, i.e., on the opposite side of the pivot joint 22, relative to the part of the jaw 14 that forms the grapple 16, there is an extension functioning as a fixed rotation elbow 55. In the embodiment set forth, the extension is arranged in a form of a fork, as shown in Figure 7. An actuator 17 is connected to the fork via a joint 56, now by its piston rod end. The actuator 17 is arranged to act on the base part 20 functioning as the swing arm of the jaw 14.

The second part 49, that is, the tip part of the movably arranged jaw 14 is arranged rotatably via the joint 50 in the first part 20, that is, at the opposite end of the base part 20. Again, a pivot mechanism 50 is arranged in the fork, shown in Figure 6, from the side of the base part 20. The tip part 49 is connected to this joint 50 at one of its ends. The tip part 49 is arranged curved in this embodiment. Hence, the tip part 49 is arranged to form a gripper-like effective jaw for material handling performed with the grapple 16. The first part, i.e., the base part 20, of the movably arranged jaw 14, is in turn arranged to form a swing arm in the grapple 16. An opening 58 is arranged in the first part, i.e., the base part 20, of the movably arranged jaw 14. Now the opening 58 is formed in the fork. Through the opening 58, the reaction arm 48 included in the jaw of the embodiment set forth is arranged to move from the frame 11 to the second part of the movably arranged jaw 14, that is, the tip part 49.

In the embodiment set forth, the tip part 49 of the jaw 14 is arranged to rotate guided by the swinging motion of the base part 20. Yet, the tip part 49 is unconnected to the base part 20 for this part. The swinging motion of the tip part 49, hence the opening and closing of the grapple 16, is arranged to be provided by means of the mechanical connection of the tip part 49 to the auxiliary beam 10, more specifically to its frame 11, via support leg constructions 34. A mechanical connection can be provided with a reaction arm 48, for example. At one of its ends, the reaction arm 48 is connected to the frame 11 by its first pivot point 53. At its opposite end, the reaction arm 48 is connected to the tip part 49 of the jaw 14, in a manner that rotates it. Hence, the tip part 49 is arranged to be acted on by the reaction arm 48, which is arranged between the tip part, i.e., the second part 49, and the frame 11. At the tip part 49 of the moving jaw 14, there is a fixed rotation elbow 51 having a pivot mechanism 52 for the reaction arm 48.

In the embodiment set forth, the swinging motion of the tip part 49 of the moving jaw 14 is provided by the relative positions of the joint 22 of the base part 20 and the joint 53 of the reaction arm 48 relative to each other. In addition, when the reaction arm 48 also has constant length, it can be used to rotate the tip part 49 by force-control with the swinging motion of the base part 20. In the embodiment set forth, the pivoting geometry of the rotation mechanism, that is, the movably arranged jaw 14, is arranged in such a way, regarding the joints 22, 53 of the base part 20 and the reaction arm 48, that when the grapple 16 is fully open, that is, when the moving jaw 14 is up, the joint 22 of the base part 20 is in the area between the joint 53 of the reaction arm 48 arranged in the frame 11 and the tip 49. Similarly, when the grapple 16 is fully closed, that is, when the moving jaw 14 is down, and when its tip part 49 is within the support leg 34, the joint 53 of the reaction arm 48 arranged in the frame 11 is in turn in the area between the joint 22 of the base part 20 and the tip part 49.

On the other hand, the location of the joints 22, 53 relative to each other could also be defined relative to the actuator's 17 joint 56, by which it is connected to the rotation elbow 55 of the base part 20 of the jaw 14. Thus, when the grapple 16 is fully open, that is, in the upper position of the jaw 14, the joint 56 is closer to the joint 53 of the reaction arm 48 than the joint 22 of the base part 20. When the grapple 16 is fully closed, that is, in the bottom position of the jaw 14, the joint 56 is closer to the joint 22 of the base part 20 than the joint 53 of the reaction arm 48.

The pivoting geometry of the moving jaw 14 of the auxiliary beam 10 shown in Figures 6 and 7 can be defined in a more general level so that it is arranged in such a way that the movement track of the grapple 16 is not an arc, the centre of which would be at the joint 22 of the jaw 14. Therefore, the movement track of the grapple 16 can be said to be eccentric relative to the joint 22 of the jaw 14. Thus, the distance between the tip 47 of the jaw 14 and its pivot joint 22 changes, when the jaw 14 is rotated.

Therefore, when the relative position of the joints 22, 53, 56 changes relative to the tip part 49 of the moving jaw 14 and, more specifically, its joints 50, 52, a standard-length reaction arm 48 can provide a swinging motion of its own for the tip part 49. This swinging motion is larger than the swinging motion of the base part 20 of the jaw 14, for example. Advantages of this embodiment include, for example, a large movement range (even 135° measured at the tip 47 of the jaw 14) and a more protected location of the moving jaw 14 within the support leg 34. Figure 7 also shows that, in the extreme positions, the difference in the orientation of the tip 49 of the jaw 14 is as much as 180 degrees. Several advantages are achieved with a moving jaw 14 according to the embodiment set forth. Due to the extended movement range, it is possible to better grab a dissolved bunch, for example, with one "grab" of the grapple 16. When the grapple 16 closes, the faster and larger swinging motion of the tip part 49 at the end of the movement range, for example, relative to the swinging motion of the base part 20 of the jaw 14, provides in turn the benefit that the grapple 16 captures the bunch more efficiently with it within the grapple 16. As a consequence, the bunch is also better held in the grapple 16, since the tip part 49 then turns better as an active gripper behind the bunch just in the final stage of the closing of the grapple 16. This improves the retention of elongated objects, such as, for example, tree trunks, in the grapple 16 that has been made relatively narrow.

In addition to the auxiliary beam 10, the invention is also related to a system for harvesting energy wood. In its basic form, the system includes an energy wood grapple 200 for cutting a tree 305. In addition, the system also includes an auxiliary beam 10 according to the invention, in which the energy wood grapple 200 can be arranged for work. The auxiliary beam 10 can be arranged at the end 102 of the boom assembly 101 of an excavator 100. The implementation of the system has been described already above, for example, regarding the excavator 100, its boom assembly 101 and also the energy wood grapple 200.

In addition to the auxiliary beam 10 and a system, the invention is also related to a method for harvesting energy wood 300. The method is described, for example, with reference to Figures 3 and 4. In the method, harvesting of elongated energy wood 300 is performed with an energy wood grapple 200. The energy wood grapple 200 is manipulated via an auxiliary beam 10 having an elongated frame 11 and equipped with a support leg 34, arranged at the end 102 of the boom assembly 101 of an excavator 100. An auxiliary beam 10 according to the invention is used in energy wood harvesting. In addition, collective and/or moving material handling is performed to elongated energy wood 300 parallel to the elongated auxiliary beam 10 with a grapple 16 included in the elongated auxiliary beam 10. Material handling takes place during harvesting of energy wood 300, i.e., during the use of energy wood grapple 200.

Material handling performed with the grapple 16 can be understood in several different ways. For example, it can include gripping of objects with the grapple 16 for moving them, moving of objects in the grip of the grapple 16 to another place and/or releasing of the objects, in other words, discharging them in the place where they were moved with the grapple 16. Hence, material handling can also be a logistic operation. In addition to moving objects from place to place, it may also consist of collecting objects with the grapple 16 to form larger units. In turn, these larger aggregated material units may be grabbed with one or more grapple grips and moved further, for example, depending on the size of the grapple 16 and/or bunches. In this material handling, the grapple 16 is used to handle elongated energy wood 300 parallel to an elongated auxiliary beam 10 and its length direction L. In other words, material handling is performed to objects set in the direction of the elongated auxiliary beam 10.

According to an embodiment, the energy wood grapple 200 is used according to the method to harvest energy wood in a manner known per se. In this connection, crop 305 harvested, i.e., cut, residing in the energy wood grapple 200 at a time can be called grapple bunches 301.1, 301.2. Grapple bunches 301.1, 301.2 are formed near the harvesting location 302.1 of the grapple bunches 301.1, 301.2, i.e., the place where they have been cut.

Grapple bunches 301.1, 301.2 formed with the energy wood grapple 200 can be either individual, or alternatively, already bundled up. In this case, two or more grapple bunches 301.1, 301.2 have been bundled up near the harvesting location 302.1 of the grapple bunches 301.1, 301.2. The collection may have taken place either with the energy wood grapple 200 by piling up crop 305 harvested with it after harvesting for forming one larger bunch. On the other hand, collecting may also have taken place by collecting with a grapple 16 of an auxiliary beam 10 according to the invention. This activity can be performed preferably even without an essential horizontal rotational motion R of the upper carriage 108 of the excavator 100. This also plays a part in accelerating the harvesting procedure. In the exemplary embodiment of Figure 3, an excavator 100 is used to operate a harvesting site 302.1 located beyond a ditch or other similar obstacle 304, where the crop 305 to be harvested with an energy wood grapple 200 is located. Instead of immediately moving an individual grapple bunch 301.1, 301.2 formed with the energy wood grapple 200, or a larger bunch comprising several energy wood grapple bunches, over the ditch 304 to the same side of the ditch 304 with the excavator 100, for example, to the side of the logging road 306, grapple bunches 301.1, 301.2 are collected together in the vicinity of their harvesting location 302.1. Collecting may take place with an energy wood grapple 200 by piling up bunches, or alternatively, with a grapple 16 according to the invention, arranged in the auxiliary beam 10, which is used to move grapple bunches to form even larger bunches. When operating with the grapple 16 of an auxiliary beam, the bunch is grabbed with the grapple 16, the bunch is moved with the grapple 16 and the bunch is released by opening the grapple 16. In addition, it makes it possible to form bunches by collecting them together. The energy wood grapple 200 does not enable manipulation of a complete bunch that is lying on the ground, at least not in a very efficient way, but only its formation, when releasing the bunch.

When the bunch collected is large enough, according to the method, it can be picked up with a grapple 16 arranged in an auxiliary beam 10 according to the invention. After this, the bunch can be moved with the grapple 16 to that side of the ditch 304 where the excavator 100 is also located. Hence, aggregated grapple bunches 301.1, 301.2 are handled with the material handling grapple 16 of the auxiliary beam 10 and moved preferably beside the logging road 306 preferably with a horizontal rotational motion R of the boom assembly 101 of the excavator 100. As stated above, grapple bunches 301.1, 301.2 can of course be collected with the grapple 16 of the auxiliary beam 10 already on the other side of the ditch 304 relative to the excavator 100, to form bunches larger than pure individual grapple bunches. This is performed without yet moving bunches to that side of the ditch 304, beside the logging road 306, on which the excavator 100 itself is located during harvesting, for example. However, the final transfer of bunches for loading them can be performed with the grapple 16 included in the auxiliary beam 10. For example, this can be performed before advancing the excavator 100 along the logging road 306 to the following energy wood harvesting location 302.2.

The grapple 16 according to the invention can therefore be used to collect energy wood 300 to form larger bunches and/or move it as these larger collected bunches to a place that is easy for energy wood loading. Then, bunches are not left, for example, in the bank of a ditch 304 or behind it or otherwise far from the logging road 306, which could possibly require, for example during loading, an essential back and forth rotational motion R of the upper carriage 108 of the excavator 100. A continuous transfer of grapple bunches by rotating the upper carriage 108 of the excavator 100 back and forth from a bank to a plain land, or more generally, between the harvesting location and the loading location, takes time and consumes fuel. With the grapple 16 and method according to the invention, operations take place faster and also more efficiently in many substeps of energy wood harvesting.

An auxiliary beam 10 according to the invention also brings a benefit to the method in the form that, before energy wood harvesting performed with the auxiliary beam 10, the auxiliary beam 10 is arranged in the boom assembly 101 of an excavator 100 with a fastening 109', which is a fastening interface 109 located exclusively at the end 102 of the boom assembly 101. The counter piece of the fastening assembly 109' on the side of the auxiliary beam 10 is the first fastening arrangement 12 arranged directly in the frame 11 of the auxiliary beam 11. All functional parts included in the auxiliary beam 10 are connected to other components included in the auxiliary beam 10 without mechanical connections, for example, to the boom assembly 101 of the excavator 100. Therefore, the fastening assembly 109' does not include other connections to the boom assembly 101 of the excavator 100, which would, in its part, play in complicating and slowing down the connection of the auxiliary beam 10 to the boom assembly 101 as well as its disconnection. A benefit also following from the above is that it is possible to change the position of the auxiliary beam 10 in the vertical plane. Then, a position change can take place during the work performed with the energy wood grapple 200, the grapple 16 or the support leg 34, more generally, the auxiliary beam 10. A position change is then performed with a swing arm assembly 103 included in the boom assembly 101 of an excavator 100. The swing arm assembly 103 is used to act on the position of the fastening interface 109 and thereby also on that of the auxiliary beam 10 connected to it.

Owing to the invention the overall work related to energy wood harvesting is improved. With an auxiliary beam 10 according to the invention equipped with a grapple and also in accordance with the method of the invention, it is more efficient to first set trees 300 in temporary bunches 301.1, 301.2 and only a moment later move them with the grapple 16 to final places as larger units. Another exemplary embodiment of an auxiliary beam 10 equipped with a grapple and a method can be clearing of a thinning site 308 and forming a logging road 306 there during the clearing work. Thus, when clearing the thinning site 308 and simultaneously forming there a logging road 306 for an excavator 100, it is often advantageous to collect temporary bunches 301.1, 301.2 on the advancement side 307 of the logging road 306, i.e., in front of the excavator 100, for example, in its travel direction, and only just before advancing along the logging road 306, move these temporarily formed bunches 301.1, 301.2 with the grapple 16 and possibly also collect them at one go in final places 303, such as, for example, beside the logging road 306, from where they will later be loaded for transportation. The efficiency benefit of such an operating procedure is even multiplied, particularly if the energy wood grapple 200 used is without a mass handling feature. The grapple 16 of the auxiliary beam 10 can be used not only to collect and move bunches, but also to perform loading of bunches, if necessary, for their transportation.

It is to be understood that the above description and the related figures are only intended to illustrate the present invention. The invention is set out in the appended claims.

## Claims

1. An auxiliary beam for an energy wood grapple, which includes
- an elongated frame (11) equipped with a first fastening arrangement (12) for arranging the auxiliary beam (10) at an end (102) of a boom assembly (101) of an excavator (100), a position of which can be changed with an arm assembly (103) fitted to the end (102) of the boom assembly (101),
- a second fastening arrangement (13) arranged in the frame (11) at one of its ends (11.1) for arranging the energy wood grapple (200) in the auxiliary beam (10),
- a support leg (34) fitted to the frame (11) in connection with its other end (11.2), arranged to receive a weight of the boom assembly (101) and the excavator (100) during a ground contact of the auxiliary beam (10), the support leg (34) being arranged on an opposite side of the frame (11) relative to the first fastening arrangement (12),
**characterised by** the auxiliary beam (10) having a first jaw (14) that is functionally pivoted in connection with the said support leg (34) and rotatably movable with an actuator (17) arranged in the auxiliary beam (10), which, together with the support leg (34), is arranged to form a grapple (16) that is openably closable in a transverse direction relative to the elongated frame (11) of the auxiliary beam (10) for material handling that can be performed with the auxiliary beam (10) for handling elongated energy wood (300) with the grapple (16) parallel to the frame (11).

2. The auxiliary beam according to Claim 1, **characterised in that** the support leg (34) is arranged to be formed of:
- two parallel wall constructions (25.1, 25.2) arranged protrudingly from the frame (11), between which the movably arranged jaw (14) is to be rotated,
- a ground stop (26) arranged at an end (27.1) of at least one of the parallel wall constructions (25.1, 25.2) .

3. The auxiliary beam according to Claim 2, **characterised in that** the two parallel wall constructions (25.1, 25.2) are arranged as a part of a box construction (24), which is open on a side of the movably arranged jaw (14) for rotating/taking the jaw (14) within the box construction (24).

4. The auxiliary beam according to Claim 3, **characterised in that** the box construction (24) includes a rear wall (28) arranged on an opposite side of the box construction (24) relative to a side left open for the movably arranged jaw (14), the rear wall being arranged to connect the parallel wall constructions (25.1, 25.2) to each other.

5. The auxiliary beam according to any of Claims 1 to 4, **characterised in that** the support leg (34) is arranged curved on an edge (32) on the side of the movably arranged jaw (14).

6. The auxiliary beam according to any of Claims 1 to 5, **characterised in that** the actuator (17) of the movably arranged jaw (14) is fitted inside the support leg (34).

7. The auxiliary beam according to any of Claims 1 to 6, **characterised in that**
- the movably arranged jaw (14) is arranged to be formed of at least two parts (20, 49), of which
- a first part (20) is arranged in the frame (11) rotatably via a pivot (22) and to which is arranged to be acted on by the actuator (17),
- a second part (49) is arranged in the first part (20) rotatably via a pivot (50) and to which is arranged to be acted on by a reaction arm (48), which is arranged between the second part (49) and the frame (11).

8. The auxiliary beam according to Claim 7, **characterised in that** a pivoting geometry of the movably arranged jaw (14) is arranged in such a way that a distance between a tip (47) of the movably arranged jaw (14) and said pivot (22) of the first part (20) is arranged to change when rotating the movably arranged jaw (14).

9. The auxiliary beam according to Claim 7 or 8, **characterised in that** a pivoting geometry of the movably arranged jaw (14) is arranged in such a way that:
- when the grapple (16) is open, the pivot (22) of the first part (20) of the movably arranged jaw (14) is in an area between the pivot (53) of the reaction arm (48) arranged in the frame (11) and the second part (49) of the moving jaw (14),
- when the grapple (16) is closed, the pivot (53) of the reaction arm (48) arranged in the frame (11) is in an area between the pivot (22) of the first part (20) of the movably arranged jaw (14) and the second part (49) of the movably arranged jaw (14).

10. The auxiliary beam according to any of Claims 7 to 9, **characterised in that**
- the first part (20) of the movably arranged jaw (14) is arranged to form a swing arm in the grapple (16),
- the second part (49) of the movably arranged jaw (14) is arranged to form an effective jaw in the grapple (16) for material handling performed with the grapple (16).

11. The auxiliary beam according to any of Claims 7 to 10, **characterised in that** an opening (58) is arranged in the first part (20) of the movably arranged jaw (14), through which the reaction arm (48) is arranged to move from the frame (11) to the second part (49) of the movably arranged jaw (14).

12. The auxiliary beam according to any of Claims 7 to 11, **characterised in that** the first and the second part (20, 49) include fixed rotation elbows (55, 51), which have corresponding pivot mechanisms (56, 52) for the actuator (17) and, respectively, the reaction arm (48).

13. The auxiliary beam according to any of Claims 1 to 12, **characterised in that** the movably arranged jaw (14) is pivoted to the frame (11) in such a way that the grapple (16) formed together by it and the support leg (34) is arranged to form aside relative to the frame (11) of the auxiliary beam (11) during its operating situation.

14. A method for harvesting energy wood, wherein harvesting of elongated energy wood is performed with an energy wood grapple (200), which is manipulated via an elongated auxiliary beam (10) arranged at an end (102) of a boom assembly (101) of an excavator (100) and equipped with a support leg (34), **characterised in that** in the method,
- an auxiliary beam (10) according to any of Claims 1 to 13 is used,
- material handling in the form of moving and/or collecting is performed to elongated energy wood (300) in parallel to the auxiliary beam (10) during harvesting of energy wood (300) with a grapple (16) included in the auxiliary beam (10).

15. A system for harvesting energy wood including:
- an energy wood grapple (200) for cutting a tree (305),
- an auxiliary beam (10), to which said energy wood grapple (200) is to be arranged for working and which said auxiliary beam (10) is to be arrangeable at an end (102) of a boom assembly (101) of an excavator (100),
**characterised in that** the auxiliary beam (10) is according to any of Claims 1 to 13.

## Patentansprüche

1. Hilfsbalken für einen Energieholzgreifer, der Folgendes einschließt
- einen länglichen Rahmen (11), der mit einer ersten Befestigungsanordnung (12) zum Anordnen des Hilfsbalkens (10) an einem Ende (102) einer Auslegeranordnung (101) eines Baggers (100) ausgestattet ist, dessen Position mit einer an dem Ende (102) der Auslegeranordnung (101) angebrachten Armanordnung (103) verändert werden kann,
- eine zweite Befestigungsanordnung (13), die in dem Rahmen (11) an einem seiner Enden (11.1) angeordnet ist, um den Energieholzgreifer (200) in dem Hilfsbalken (10) anzuordnen,
- ein Stützbein (34), das mit seinem anderen Ende (11.2) am Rahmen (11) angebracht ist und dazu dient, das Gewicht der Auslegeranordnung (101) und des Baggers (100) während des Bodenkontakts des Hilfsbalkens (10) aufzunehmen, wobei das Stützbein (34) auf einer der ersten Befestigungsanordnung (12) gegenüberliegenden Seite des Rahmens (11) angeordnet ist,
**dadurch gekennzeichnet, dass** der Hilfsbalken (10) eine erste Backe (14) aufweist, die in Verbindung mit dem Stützbein (34) funktionsfähig drehbar und mit einem im Hilfsbalken (10) angeordneten Aktuator (17) drehbar bewegbar ist, der zusammen mit dem Stützbein (34) einen Greifer (16) anordnet, der in Querrichtung zum länglichen Rahmen (11) des Hilfsbalkens (10) zum Materialtransport, der mit dem Hilfsbalken (10) zum Transportieren von länglichem Energieholz (300) mit dem Greifer (16) parallel zum Rahmen (11) durchgeführt werden kann, zu öffnen und zu schließen ist.

2. Hilfsbalken nach Anspruch 1, **dadurch gekennzeichnet, dass** das Stützbein (34) so angeordnet ist, dass es gebildet wird aus:
- zwei parallelen Wandkonstruktionen (25.1, 25.2), die vorstehend vom Rahmen (11) angeordnet sind und zwischen denen die beweglich angeordnete Backe (14) gedreht werden soll,
- einem Bodenanschlag (26), der an einem Ende (27.1) mindestens einer der parallelen Wandkonstruktionen (25.1, 25.2) angeordnet ist.

3. Hilfsbalken nach Anspruch 2, **dadurch gekennzeichnet, dass** die beiden parallelen Wandkonstruktionen (25.1, 25.2) als Teil einer Kastenkonstruktion (24) angeordnet sind, die auf einer Seite der beweglich angeordneten Backe (14) offen ist, um die Backe (14) innerhalb der Kastenkonstruktion (24) zu drehen/aufzunehmen.

4. Hilfsbalken nach Anspruch 3, **dadurch gekennzeichnet, dass** die Kastenkonstruktion (24) eine Rückwand (28) einschließt, die auf einer gegenüberliegenden Seite der Kastenkonstruktion (24) relativ zu einer für die beweglich angeordnete Backe (14) offen gelassenen Seite angeordnet ist, wobei die Rückwand so angeordnet ist, dass sie die parallelen Wandkonstruktionen (25.1, 25.2) miteinander verbindet.

5. Hilfsbalken nach Anspruch 1 bis 4, **dadurch gekennzeichnet, dass** das Stützbein (34) gekrümmt an einem Rand (32) auf der Seite der beweglich angeordneten Backe (14) angeordnet ist.

6. Hilfsbalken nach einem der Ansprüche 1 bis 5, **dadurch gekennzeichnet, dass** der Aktuator (17) der beweglich angeordneten Backe (14) innerhalb des Stützbeins (34) angebracht ist.

7. Hilfsbalken nach einem der Ansprüche 1 bis 6, **dadurch gekennzeichnet, dass**
- die beweglich angeordnete Backe (14) aus mindestens zwei Teilen (20, 49) gebildet ist, von denen
- ein erstes Teil (20) über einen Drehzapfen (22) drehbar im Rahmen (11) angeordnet ist und auf den der Aktuator (17) einwirkt,
- ein zweites Teil (49) drehbar über einen Drehzapfen (50) im ersten Teil (20) angeordnet ist und auf das ein Reaktionsarm (48) einwirkt, der zwischen dem zweiten Teil (49) und dem Rahmen (11) angeordnet ist.

8. Hilfsbalken nach Anspruch 7, **dadurch gekennzeichnet, dass** eine Drehgeometrie der beweglich angeordneten Backe (14) so angeordnet ist, dass sich ein Abstand zwischen einer Spitze (47) der beweglich angeordneten Backe (14) und dem Drehzapfen (22) des ersten Teils (20) beim Drehen der beweglich angeordneten Backe (14) ändert.

9. Hilfsbalken nach Anspruch 7 oder 8, **dadurch gekennzeichnet, dass** eine Drehgeometrie der beweglich angeordneten Backe (14) so angeordnet ist, dass:
- wenn der Greifer (16) geöffnet ist, sich der Drehzapfen (22) des ersten Teils (20) der beweglich angeordneten Backe (14) in einem Bereich zwischen dem Drehzapfen (53) des im Rahmen (11) angeordneten Reaktionsarms (48) und dem zweiten Teil (49) der beweglichen Backe (14) befindet,
- wenn der Greifer (16) geschlossen ist, sich der Drehzapfen (53) des im Rahmen (11) angeordneten Reaktionsarms (48) in einem Bereich zwischen dem Drehzapfen (22) des ersten Teils (20) der beweglich angeordneten Backe (14) und dem zweiten Teil (49) der beweglich angeordneten Backe (14) befindet.

10. Hilfsbalken nach einem der Ansprüche 7 bis 9, **dadurch gekennzeichnet, dass**
- der erste Teil (20) der beweglich angeordneten Backe (14) so angeordnet ist, dass er einen Schwenkarm in dem Greifer (16) bildet,
- der zweite Teil (49) der beweglich angeordneten Backe (14) so angeordnet ist, dass er eine wirksame Backe in dem Greifer (16) für den mit dem Greifer (16) durchgeführten Materialtransport bildet.

11. Hilfsbalken nach einem der Ansprüche 7 bis 10, **dadurch gekennzeichnet, dass** in dem ersten Teil (20) der beweglich angeordneten Backe (14) eine Öffnung (58) angeordnet ist, durch die der Reaktionsarm (48) so angeordnet ist, dass er sich vom Rahmen (11) zum zweiten Teil (49) der beweglich angeordneten Backe (14) bewegt.

12. Hilfsbalken nach einem der Ansprüche 7 bis 11, **dadurch gekennzeichnet, dass** der erste und der zweite Teil (20, 49) feste Drehgelenke (55, 51) einschließen, die entsprechende Drehmechanismen (56, 52) für den Aktuator (17) bzw. den Reaktionsarm (48) aufweisen.

13. Hilfsbalken nach Anspruch 1 bis 12, **dadurch gekennzeichnet, dass** die beweglich angeordnete Backe (14) so am Rahmen (11) drehbar gelagert ist, dass der durch sie und das Stützbein (34) gemeinsam gebildete Greifer (16) in seiner Betriebsstellung seitlich zum Rahmen (11) des Hilfsbalkens (11) angeordnet ist.

14. Verfahren zum Ernten von Energieholz, wobei das Ernten von länglichem Energieholz mit einem Energieholzgreifer (200) durchgeführt wird, der über einen länglichen Hilfsbalken (10) manipuliert wird, der an einem Ende (102) einer Auslegeranordnung (101) eines Baggers (100) angeordnet und mit einem Stützbein (34) ausgestattet ist, **dadurch gekennzeichnet, dass** bei dem Verfahren,
- ein Hilfsbalken (10) nach einem der Ansprüche 1 bis 13 verwendet wird,
- während der Ernte von Energieholz (300) mit einem im Hilfsbalken (10) eingeschlossenen Greifer (16) einem Materialtransport in Form von Bewegen und/oder Sammeln an länglichem Energieholz (300) parallel zu dem Hilfsbalken (10) durchgeführt wird.

15. System zum Ernten von Energieholz, umfassend:
- einen Energieholzgreifer (200) zum Schneiden eines Baumes (305),
- einen Hilfsbalken (10), an dem der Energieholzgreifer (200) zum Arbeiten angeordnet werden soll und der Hilfsbalken (10) an einem Ende (102) einer Auslegeranordnung (101) eines Baggers (100) anbringbar ist,
**dadurch gekennzeichnet, dass** der Hilfsbalken (10) nach einem der Ansprüche 1 bis 13 ausgebildet ist.

## Revendications

1. Poutre auxiliaire pour grappin à bois de feu, comprenant
- un cadre allongé (11) équipé d'un premier dispositif de fixation (12) pour disposer la poutre auxiliaire (10) à une extrémité (102) d'une flèche (101) d'une excavatrice (100), dont la position peut être modifiée à l'aide d'un bras (103) fixé à l'extrémité (102) de la flèche (101),
- un deuxième dispositif de fixation (13) disposé dans le cadre (11) à l'une de ses extrémités (11.1) pour fixer le grappin à bois de feu (200) dans la poutre auxiliaire (10),
- une jambe de soutien (34) fixée au cadre (11) et reliée à son autre extrémité (11.2), conçue pour recevoir le poids de la flèche (101) et de l'excavatrice (100) lors d'un contact au sol de la poutre auxiliaire (10), la jambe de soutien (34) étant disposée sur un côté opposé du cadre (11) par rapport au premier dispositif de fixation (12),
**caractérisée en ce que** la poutre auxiliaire (10) a une première mâchoire (14) qui est articulée de manière fonctionnelle en lien avec ladite jambe de soutien (34) et peut pivoter à l'aide d'un actionneur (17) disposé dans la poutre auxiliaire (10), qui, avec la jambe de soutien (34), est conçue pour former un grappin (16) qui peut être ouvert et fermé dans une direction transversale par rapport au cadre allongé (11) de la poutre auxiliaire (10) pour la manipulation de matériaux qui peut être effectuée avec la poutre auxiliaire (10) pour la manipulation de bois de feu allongé (300) avec le grappin (16) parallèle au cadre (11).

2. Poutre auxiliaire conformément à la revendication 1, **caractérisée en ce que** la jambe de soutien (34) est disposée de façon à être formée de :
- deux parois parallèles (25.1, 25.2) disposées en saillie par rapport au cadre (11), entre lesquelles la mâchoire articulée (14) doit tourner,
- une butée de sol (26) disposée à une extrémité (27.1) d'au moins une des parois parallèles (25.1, 25.2).

3. Poutre auxiliaire conformément à la revendication 2, **caractérisée en ce que** les deux parois parallèles (25.1, 25.2) font partie d'un caisson (24), qui est ouvert sur un côté de la mâchoire articulée (14) pour que la mâchoire (14) puisse tourner/entrer à l'intérieur du caisson (24).

4. Poutre auxiliaire conformément à la revendication 3, **caractérisée en ce que** le caisson (24) comprend une paroi arrière (28) disposée sur le côté opposé de la construction du caisson (24) par rapport au côté laissé ouvert pour la mâchoire articulée (14), la paroi arrière servant à relier les parois parallèles (25.1, 25.2) entre elles.

5. Poutre auxiliaire conformément à l'une quelconque des revendications 1 à 4, **caractérisée en ce que** la jambe de soutien (34) est arrondie sur un bord (32) du côté de la mâchoire articulée (14).

6. Poutre auxiliaire conformément à l'une quelconque des revendications 1 à 5, **caractérisée en ce que** l'actionneur (17) de la mâchoire articulée (14) se trouve à l'intérieur de la jambe de soutien (34).

7. Poutre auxiliaire conformément à l'une quelconque des revendications 1 à 6, **caractérisée en ce que**
- la mâchoire articulée (14) est constituée d'au moins deux parties (20, 49), dont
- une première partie (20) disposée dans le cadre (11) et articulée autour d'un pivot (22) sur laquelle l'actionneur (17) peut agir,
- une deuxième partie (49) disposée dans la première partie (20) et articulée autour d'un pivot (50) sur laquelle peut agir un bras de réaction (48), qui est disposé entre la deuxième partie (49) et le cadre (11).

8. Poutre auxiliaire conformément à la revendication 7, **caractérisée en ce que** la géométrie de pivotement de la mâchoire articulée (14) est conçue de telle sorte que la distance entre une pointe (47) de la mâchoire articulée (14) et ledit pivot (22) de la première partie (20) varie lors de la rotation de la mâchoire articulée (14).

9. Poutre auxiliaire conformément à la revendication 7 ou 8, **caractérisée en ce que** la géométrie de pivotement de la mâchoire articulée (14) est conçue de telle sorte que :
- lorsque le grappin (16) est ouvert, le pivot (22) de la première partie (20) de la mâchoire articulée (14) se trouve dans une zone située entre le pivot (53) du bras de réaction (48) disposé dans le cadre (11) et la deuxième partie (49) de la mâchoire articulée (14),
- lorsque le grappin (16) est fermé, le pivot (53) du bras de réaction (48) disposé dans le cadre (11) se trouve dans une zone située entre le pivot (22) de la première partie (20) de la mâchoire articulée (14) et la deuxième partie (49) de la mâchoire articulée (14).

10. Poutre auxiliaire conformément à l'une quelconque des revendications 7 à 9, **caractérisée en ce que**
- la première partie (20) de la mâchoire articulée (14) est disposée de façon à former un bras oscillant dans le grappin (16),
- la seconde partie (49) de la mâchoire articulée (14) est disposée de façon à former une mâchoire efficace dans le grappin (16) pour la manipulation de matériaux effectuée avec le grappin (16).

11. Poutre auxiliaire conformément à l'une quelconque des revendications 7 à 10, **caractérisée en ce qu'**il y a une ouverture (58) dans la première partie (20) de la mâchoire articulée (14), par laquelle le bras de réaction (48) peut se déplacer du cadre (11) vers la deuxième partie (49) de la mâchoire articulée (14).

12. Poutre auxiliaire conformément à l'une quelconque des revendications 7 à 11, **caractérisée en ce que** la première et la deuxième partie (20, 49) comprennent des coudes de rotation fixes (55, 51), dotés des mécanismes de pivotement correspondants (56, 52) pour l'actionneur (17) et, respectivement, le bras de réaction (48).

13. Poutre auxiliaire conformément à l'une quelconque des revendications 1 à 12, **caractérisée en ce que** la mâchoire articulée (14) est fixée de manière pivotante au cadre (11) de telle sorte que le grappin (16) formé par elle et la jambe de soutien (34) se forme à l'écart du cadre (11) de la poutre auxiliaire (11) en situation de fonctionnement.

14. Procédé de collecte de bois de feu, dans lequel la collecte de bois de feu allongé est effectuée avec un grappin à bois de feu (200), qui est manipulé via une poutre auxiliaire allongée (10) disposée à une extrémité (102) d'une flèche (101) d'une excavatrice (100) et équipée d'une jambe de soutien (34), **caractérisé en ce que**, dans le procédé,
- une poutre auxiliaire (10) conformément à l'une quelconque des revendications 1 à 13 est utilisée,
- la manipulation des matériaux, à savoir le déplacement et/ou la collecte de bois de feu allongé (300), est effectuée parallèlement à la poutre auxiliaire (10) pendant la collecte du bois de feu (300) à l'aide d'un grappin (16) compris dans la poutre auxiliaire (10).

15. Système de collecte de bois de feu comprenant :
- un grappin à bois de feu (200) pour couper un arbre (305),
- une poutre auxiliaire (10), à laquelle ledit grappin à bois de feu (200) est destiné à être fixé pour fonctionner, ladite poutre auxiliaire (10) étant destinée à être disposée à une extrémité (102) d'une flèche (101) d'une excavatrice (100),
**caractérisé en ce que** la poutre auxiliaire (10) est conforme à l'une quelconque des revendications 1 à 13.
